# EUROPEAN PATENT SPECIFICATION

(11) **EP 3 894 676 B1**
(45) Date of publication and mention of the grant of the patent: **30.09.2026**
(21) Application number: 19835736.0
(22) Date of filing: 13.12.2019
(51) Int. Cl.: F01N 3/20, F01N 13/18, F01N 13/16, B60K 15/03

(54) **TANK ADAPTED TO CONTAIN A FLUID AND HAVING A HEATER AND METHOD FOR MANUFACTURING SAME**
BEHÄLTER ZUR AUFNAHME EINES FLUIDS MIT EINEM HEIZELEMENT UND VERFAHREN ZU SEINER HERSTELLUNG
RÉSERVOIR CONÇU POUR CONTENIR UN FLUIDE ET DOTÉ D'UN DISPOSITIF DE CHAUFFAGE ET SON PROCÉDÉ DE FABRICATION

(30) Priority: 14.12.2018 IT 201800011132
(43) Date of publication of application: 20.10.2021
(73) Proprietor: Officine Metallurgiche G. Cornaglia S.p.A., 10092 Beinasco (TO) (IT)
(72) Inventor: BERTUCCI, Nazzareno, 10092 Beinasco (TO) (IT); CORNAGLIA, Umberto, 10092 Beinasco (TO) (IT); VILLATA, Giorgio, 10092 Beinasco (TO) (IT); TAVELLA, Andrea, 10092 Beinasco (TO) (IT)
(74) Representative: Robba, Pierpaolo
(86) International application number: PCT/IB2019/060755
(87) International publication number: WO 2020/121267

(56) References cited:
- EP-A1- 1 925 354
- DE-A1- 102009 029 313
- US-A1- 2015 196 862
- US-A1- 2018 094 562

## Description

### Technical Field

The present invention relates to a tank adapted to contain a fluid and having a heater, and to a method of manufacturing said tank. The tank according to the invention is arranged to contain a fluid in liquid state, intended for a selective catalytic reduction (SCR) system of an exhaust system of an internal combustion engine. More particularly, the tank according to the invention is arranged to be installed on a vehicle equipped with an internal combustion engine having an exhaust system incorporating a selective catalytic reduction system.

### Prior Art

SCR (Selective Catalytic Reduction) technology is based on a reduction of ammonia NH₃ to nitrogen N₂ with a consequent handover of hydrogen atoms H to nitrogen oxides NOₓ, in order to produce water molecules H₂O and nitrogen molecules N₂. Such a reaction is stoichiometric, i.e., if a sufficient amount of ammonia, proportionate to the amount of NOₓ produced by the internal combustion engine, is fed into a predetermined volume, or reaction chamber, all of NOₓ will be transformed into water and nitrogen. SCR technology allows therefore cutting down NOₓ that are released into the atmosphere with the exhaust gases of an endothermic engine.

The SCR system is fed with a solution containing 32.5% in weight urea and 67.5% demineralised water. Such a solution is commercially available under the name AdBlue^{®}. AdBlue^{®} is fed to the reduction system incorporated in the exhaust system of an endothermic engine through a metering pump connected to an injection system. A supply circuit is provided upstream of the pump and is connected to a tank in which the AdBlue^{®} liquid is stored. The AdBlue^{®} liquid contained in the tank solidifies when temperature falls below -11.5°C.

At present, to prevent freezing, the tank is equipped with a unit known as sender unit or drawing unit, arranged to heat the liquid contained in the tank by means of a heat exchanger and to allow drawing the liquid through a duct or suction pipe. The heat exchanger includes a metal duct in which the coolant liquid of the endothermic engine, the exhaust gases of which are treated with the AdBlue^{®} solution contained in the tank, circulates. Thanks to the heat exchanger, the temperature of the AdBlue^{®} liquid contained in the tank is brought to and kept at a temperature higher than -11.5°C.

The sender unit further includes delivery and return pipes for the liquid contained in the tank, for delivering the liquid from the tank to the metering pump and for the return of the excess amount to the tank, respectively.

The most recent sender units are equipped with some additional components besides the components mentioned above. More particularly, sender units are known that are equipped with sensors for measuring parameters of the liquid contained in the tank, such as level, temperature and quality, the latter parameter being generally determined through a measurement of the urea concentration in the solution.

The prior art sender units are further equipped with net filters for a coarse filtering of the solution contained in the tank before the solution is sucked from the tank for being sent to the metering pump.

Lastly, the sender units are also equipped with a printed circuit board for acquiring the signals coming from the sensors and with electrical connectors for connecting the unit to an electrical circuit, associated with an electronic control unit for controlling the operation of the SCR reduction system.

As evidenced above, the current sender units integrate the functions of heating and drawing the liquid contained in the tank into a single apparatus. According to the prior art, the sender unit includes a portion internal to the tank, an external portion and a flange, located between the internal and external portions, for securing the unit to the tank wall in correspondence of a suitable hole. The unit is thus inserted into the tank through an opening provided in the tank wall and is secured to the tank by means of screws engaging the flange. This situation gives rise to a number of drawbacks and limitations. For instance, the shape and the development of the portion of the sender unit housed in the tank cannot be chosen at will, for instance in order to increase the unfreezing capability and rapidity, but they must be compatible with the entrance hole in order to allow installing the unit. Moreover, the sender units presently known are designed for being generally installed in the upper tank portion, typically at the top face of the tank. Such a limitation entails the need to make sender units equipped with a suction pipe with a suitable length, in order to suck the liquid as the tank is being emptied. Said suction pipe undergoes vibrations while the vehicle is traveling and can therefore undergo breakages. Always due to the situation mentioned above, supplementing a sender unit with further functions and components, e.g. sensors, is at present difficult.

US 2011/0271754 and EP 3177814 A1 disclose examples of prior art sender units.

Other examples of sender units are disclosed in DE 10 2009 029313 A1, US 2015/196862 A1, EP 1 925 354 A1 and US 2018/094562 A1.

Thus, it is a first object of the invention to overcome the limitations of the prior art and to improve the unfreezing capabilities of the liquid contained in the tank of a sender unit.

It is another object of the invention to improve the filtering of the liquid drawn by the suction pump for being sent to the SCR system.

It is a further object of the invention to allow measuring a high number of parameters of the liquid contained in the tank, by means of sensors, in order to meet the control requirements by more and more sophisticated electronic control units.

The current tanks designed for containing a urea solution are moreover equipped with a filler pipe having a closing cap. The filler pipe allows filling the tank by means of the spout of a supply gun or a container of the urea solution. To prevent impurities from entering the tank during filling operations, the filler pipe is equipped with a filter. The filter includes a cylindrical support open both at its bottom and laterally and equipped with a net. The cylindrical support is introduced through an annular flange secured to the tank at a hole provided to that aim. The support is secured to the flange by means of a coupling system allowing removing the filter for cleaning it.

Yet, the current filler pipes do not allow a quick filling of the tank, especially because of the poor filtering capability. Actually, the filtering surfaces of the current filler pipes generally do not exceed 4070 mm².

It is therefore a further, but not the last object of the invention to overcome the drawbacks and the limitations of the prior art by providing a tank that can be quickly filled and industrially manufactured at advantageous costs.

It is therefore a further, but not the last object of the invention to overcome the drawbacks and the limitations of the prior art by providing a tank that can be industrially manufactured at advantageous costs.

The above and other objects are achieved by means of the tank according to the invention as claimed in the appended claims.

### Description of the Invention

The tank according to the invention comprises a wall made of a plastic material and defining therein a tank chamber arranged to contain a substance in liquid state, comprising for instance a urea solution intended for a system for the selective catalytic reduction (SCR) of the exhaust gases of an endothermic engine. The tank is equipped with at least one heating assembly arranged to heat the fluid contained in the tank, in particular in order to avoid freezing thereof. The heating assembly includes a first unit, or heating unit, designed for heating the fluid in the tank. The heating unit comprises a heating duct provided with an inlet opening and an outlet opening for conveying a heating fluid. The duct extends, within the tank, from the inlet opening towards the outlet opening preferably as an integral piece, i.e. preferably without connections or interruptions. The inlet and outlet openings of the duct are located outside the tank and can be connected, by known means, to a section of the cooling circuit of an endothermic engine. Said endothermic engine preferably is the same engine whose exhaust gases are treated by the SCR system receiving the fluid contained in the tank.

According to the invention, said heating unit is incorporated in the tank, i.e. it is immovably associated with the tank so that the tank and the heating duct substantially form a single piece.

According to the invention, the duct of the heating unit is made of the same material as that of the tank wall. For instance, when the tank is made of a plastic material, also the duct is made of the same plastic material. In this example, the tank and the heating duct can be obtained together by means of a single moulding process, e.g. of rotational type. In the alternative, still referring to this exemplary embodiment, the tank can be obtained by means of a moulding process, e.g. of rotational type, in a mould in which the previously obtained heating duct has been previously placed, i.e. substantially by means of a co-moulding process.

According to an example not representing the invention, the duct of the heating unit is made of a material other than that of the tank wall. For instance, when the tank is made of a plastic material, the duct is made of a different plastic material or of a metal. In this example, the tank is preferably obtained by means of a moulding process, e.g. of rotational type, in a mould in which the previously obtained heating duct has been previously placed, i.e. substantially by means of a co-moulding process.

According to the invention, the heating assembly comprises a second unit, or drawing unit, for drawing said fluid and sending it to the circuit of the SCR system. The drawing unit comprises a drawing duct having an inlet opening and an outlet opening. The inlet and outlet openings of the drawing duct are located inside and outside the tank, respectively,

According to the invention, said heating and drawing units are located adjacent, that is, they are associated with the tank wall at respective adjacent wall portions. Optionally, said units can be

According to the invention, said units are located at a distance from each other, that is, they are associated with the tank wall at respective portions distant from each other, preferably on opposite tank faces. According to this embodiment of the invention, said units either can be diametrically opposite, with their respective longitudinal axes substantially parallel, for instance when they are associated with respective parallel faces of a parallelepiped tank, or the units can be arranged with their respective axes substantially perpendicular, for instance when they are associated with respective perpendicular faces of a parallelepiped tank.

According to a preferred embodiment of the invention, the duct for conveying the heating fluid for heating the liquid contained in the tank is directly associated with the tank in the moulding step of the plastic material by means of the co-moulding technique. In this way, it is advantageously possible to obtain a heat exchanger, having the desired development and shape, inside the tank, so as to occupy a volume sufficient to ensure the desired unfreezing

Advantageously, said heating duct can be externally smooth or embossed, and can be made of steel or of a suitable plastic material or of the same plastic material as that of the tank. Moreover, the heat exchanger can be free or can be secured by means of brackets or clips located in the tank, in order to prevent possible displacements and/or breakages due to vibrations and oscillations during use.

Preferably, according to the invention, the tank further has an inlet for the return of the excess substance coming from the SCR system. Such an inlet preferably consists of a thin tube co-moulded in the tank wall and provided with a connecting joint outside the tank for connection of a return pipe coming from the SCR system. Such a thin tube is preferably made of plastics, e.g. the same plastic material as that of the tank, or of metal or another material. Preferably, said thin tube is located near the wall portion to which the first heating unit is secured and preferably on the top face of the tank.

In a particular embodiment of the invention, the heating duct is equipped with one or more solenoid valves, preferably located outside the tank, to put said duct in communication, when necessary, with the cooling circuit of an endothermic engine. Said valves are preferably provided with suitable fast couplings for connection to the pipes of the cooling circuit of the endothermic engine and with an electrical connector for allowing connection to an electrical circuit associated with a temperature sensor, for opening and closing the valves depending on the temperature.

According to the invention, the tank can have shapes and sizes chosen depending on the client's needs and the vehicle sizes.

The tank will further be equipped with a filler pipe for introducing the liquid into the tank, the filler pipe being preferably provided with a net filter suitably dimensioned so as to enable increasing the surface through which the liquid passes while the tank is being filled. In this manner, it is advantageously possible to make the filter of the filler pipe with porosity lower than the current 100 microns. According to this particular embodiment of the invention, the filter of the filler pipe can be made with porosity in the range 20 to 100 microns.

Advantageously, according to this particular embodiment of the invention, the filtering surface of the filler pipe will be at least about 9550 mm², to allow an adequate filling rate, notwithstanding the reduction in the porosity of the filtering surface.

### Brief Description of the Figures

Some preferred embodiments of the invention will be described hereinafter with reference to the accompanying drawings, in which:
- Fig. 1 is a perspective view of a tank in accordance with a first embodiment of the invention;
- Fig. 2 is a cross-sectional view, taken along a first vertical plane, of an exemplary tank not representing the invention;
- Fig. 3 is an enlarged view of a detail of Fig. 2;
- Fig. 4 is a cross-sectional view, taken along a second vertical plane rotated by 90°, of the tank shown in Fig. 2;
- Fig. 5 is an enlarged view of a detail of Fig. 4;
- Fig. 6 is a cross-sectional view of the drawing unit of the tank shown in Fig. 1;
- Fig. 7 is a plan view from below of the drawing unit shown in Fig. 6;
- Fig. 8 is a side view of the drawing unit shown in Fig. 6;
- Fig. 9 is a cross-sectional view, taken along a vertical plane, of a tank in accordance with a second embodiment of the invention;
- Fig. 10 is an enlarged view of a detail of Fig. 9;
- Fig. 11 is a perspective view of the drawing unit of the tank shown in Fig. 9;
- Fig. 12 is a perspective view from above of the drawing unit shown in Fig. 11;
- Fig. 13 is an exploded perspective view of the drawing unit in accordance with the first embodiment of the invention;
- Fig. 14 is a plan view from below of the drawing unit shown in Fig. 13;
- Fig. 15 is a side view of the heating unit equipped with a solenoid valve;
- Fig. 16 is a cross-sectional view, taken along a first vertical plane, of the tank equipped with a filler pipe according to a preferred embodiment of the invention;
- Fig. 17 is a cross-sectional view, taken along a second vertical plane rotated by 90°, of the tank shown in Fig. 16;
- Fig. 18 is a perspective view of the filler pipe shown in Fig. 16;
- Fig. 19 is a cross-sectional view, taken along a vertical plane, of the filler pipe shown in Fig. 16;
- Fig. 20 is an exploded view of the filler pipe shown in Fig. 16.

In all accompanying Figures, the same reference numerals have been used to denote equal or functionally equivalent components.

### Description of the figures

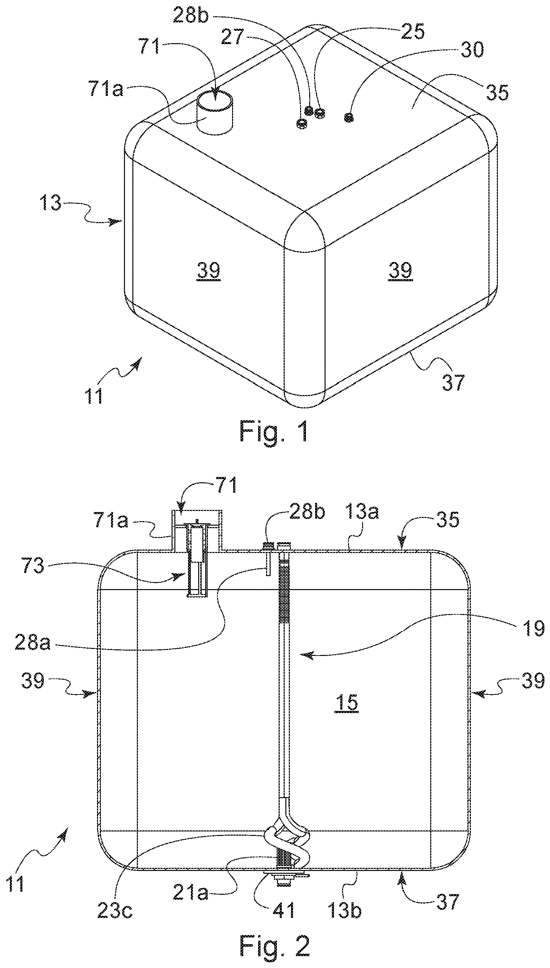

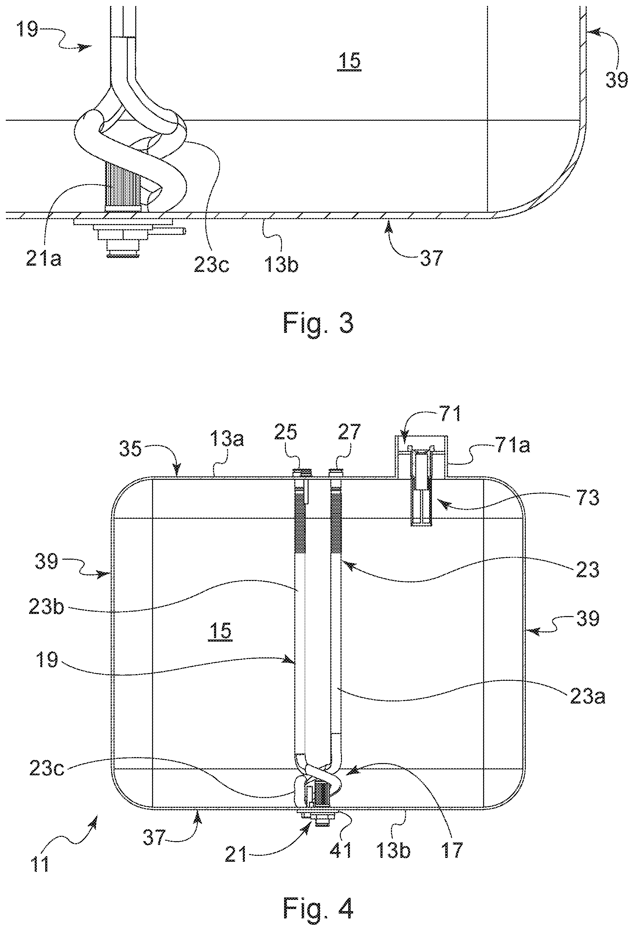

Referring to Figs. 1 to 5, an example of a tank not according to the invention is illustrated. Tank 11 has a wall 13, made of a plastic material, internally defining a tank chamber 15. The material wall 13 is made of is such as to allow tank 11 to contain a substance in liquid state comprising, for instance, a urea solution intended for a system for the selective catalytic reduction (SCR) of the exhaust gases of an endothermic engine. Tank 11 is equipped with at least one heating assembly 17, arranged to heat the fluid contained in tank 11, in particular in order to avoid freezing thereof.

Heating assembly 17 includes a first unit 19, or heating unit, intended for heating the fluid in tank 11.

Heating unit 19 includes a heating duct 23, provided with an inlet opening 25 and an outlet opening 27, for conveying a heating fluid. Duct 23 extends within tank 11, from inlet opening 25 towards outlet opening 27, preferably as an integral piece, i.e. preferably without connections or interruptions. In the illustrated example, moreover, duct 23 of the first unit 19 comprises a rectilinear portion and a spiral section. A delivery section 23a and a return section 23b are defined within said rectilinear portion, and said spiral section 23c establishes communication between sections 23a, 23b.

Inlet and outlet openings 25, 27 of duct 23 are located outside tank 11 and can be connected, by known means, to a section of a cooling circuit of an endothermic engine. Said endothermic engine preferably is the same engine whose exhaust gases are treated by the SCR system receiving the fluid contained in the tank.

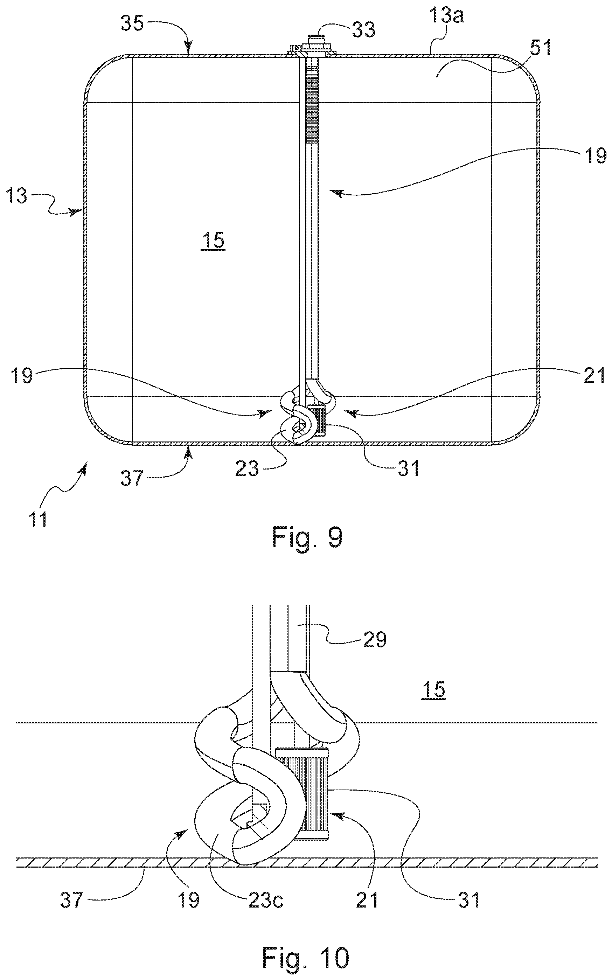

Duct 23 for heating the liquid contained in tank 11 is associated with wall 13 of tank 11 directly in the moulding step of the plastic material by means of the co-moulding technique. In this way, it is advantageously possible to obtain a heat exchanger, having the desired development and shape, by means of unit 19 inside tank 11, so as to occupy a volume sufficient to ensure the desired unfreezing. For instance, duct 23 could have a development such that it extends within chamber 15 either vertically, as shown for instance in Fig. 9, or also horizontally.

Advantageously, the wall of duct 23 of unit 19 can be smooth or embossed and can be made of steel or of a suitable plastic material, even identical to the material of wall 13. Moreover, duct 23, extending within chamber 15 with its delivery and return sections 23a, 23b and its spiral connecting section 23c, can be free or can be secured by means of clips or hangers or brackets located in tank chamber 15 and arranged to prevent possible displacements and/or breakages due to vibrations and oscillations during use, e.g. while a vehicle on which the tank is installed is traveling.

During the moulding process, preferably a rotational moulding, of the plastic material of tank 11, a pipe made of stainless steel or another material is introduced into and secured inside the same tank and is then connected to the cooling system of the internal combustion engine in order to act as a heat exchanger. Assembly 17 can further include a second unit 21, or suction or drawing unit, for drawing said fluid and sending it to a suction or metering pump of a system for the selective catalytic reduction (SCR) of the exhaust gases.

According to a particular example, said heating and drawing units 19 and 21 are advantageously independent units, that is, they are mutually separated by a portion of the wall of tank 11, so that, should said portion of the tank wall be removed, said units 19, 21 would be disjoined from each other. Thus, advantageously, according to the invention, heating unit 19 and drawing unit 21 can be associated with tank 11 at adjacent portions, or even at spaced apart portions, of tank wall 13.

Referring again to Figs. 1 to 5, said units 19, 21 are located at a distance from each other, that is, they are associated with wall 13 of tank 11 at respective portions 13a, 13b of said wall distant from each other, preferably on opposite parallel faces 35, 37 of tank 11. According to this example, units 19, 21 can be diametrically opposite, with the respective longitudinal axes substantially parallel and preferably coaxial, for instance when they are associated with respective parallel faces 35, 37 of a parallelepiped tank 11. In the alternative, said units 19, 21 can be arranged with the respective longitudinal axes substantially perpendicular, for instance when they are associated with respective perpendicular faces 35, 39 of a parallelepiped tank 11.

In the illustrated example, unit 19 and unit 21 extend in a substantially rectilinear direction and are arranged substantially coaxial to each other. Tank 11 shown in the Figures is oriented in its normal use configuration, i.e. with face 35 housing heating unit 19 located at the top and with face 37 housing drawing unit 21 located at the bottom. In accordance with such an arrangement, heating unit 19 extends over substantially the whole depth of tank 11, i.e. substantially across the tank in vertical direction, and drawing unit 21 extends over a portion sufficient to draw the liquid from the bottom of tank 11.

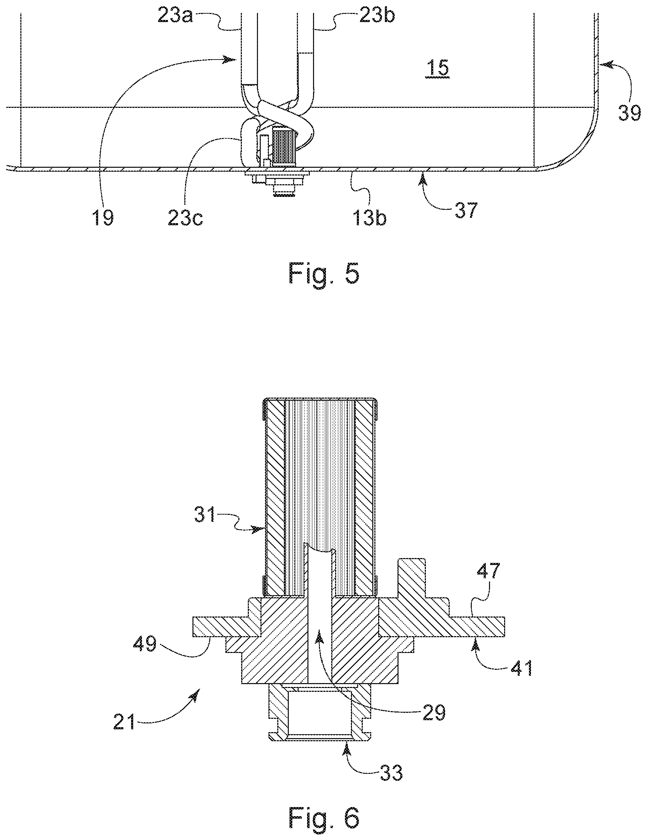

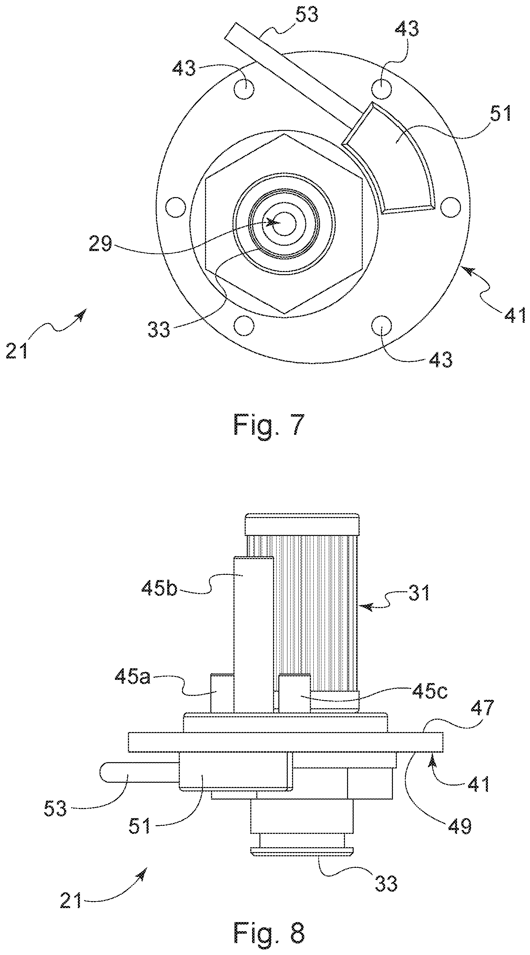

As it can be better seen in Figs. 6 and 7, drawing unit 21 includes a drawing duct 29 having an inlet opening 31 and an outlet opening 33. Inlet and outlet openings 31, 33 of drawing duct 29 are located inside and outside tank 11, respectively. Drawing unit 21 further includes a ring nut or ferrule 41 provided with through-holes 43 for securing, for instance by means of screws, drawing unit 21 to wall 13 of tank 11 at a suitable hole provided therein. In the alternative, ferrule 41 can be welded or glued to said wall 13 of tank 11. Ferrule 41 is moreover associated with temperature sensors 45a, level sensors 45b and quality sensors 45c for the liquid contained in tank 11. Said sensors 45a, 45b and 45c are associated with ferrule 41 on face 47 of said ferrule facing the inside of tank 11, so as to be exposed in chamber 15 enclosed by tank wall 13. A seat 51 internally housing a printed circuit board electrically connected to said sensors 45a, 45b, 45c is provided on the opposite face 49 of ferrule 41. The printed circuit board is also equipped with connectors for connecting the printed circuit board, through a cable 53, to an electrical circuit associated with an electronic control unit for controlling the functions of the SCR system through the signals coming from sensors 45a, 45b, 45c.

Turning now to Figs. 9 and 10, in accordance with a second preferred embodiment of the invention, said units 19, 21 are located adjacent, that is, they are associated with tank wall 13 at a respective and substantially coincident wall portion 13a. In the illustrated embodiment, heating unit 19 and drawing unit 21 are located adjacent on the same face 35 of a substantially parallelepiped tank 11. In the illustrated example, unit 19 and unit 21 extend in a substantially rectilinear direction and are arranged substantially coaxial to each other. Tank 11 illustrated is oriented in its normal use configuration, i.e. with face 35 housing heating unit 19 and drawing unit 21 at portion 13a located at the top. In accordance with such an arrangement, heating unit 19 preferably extends over substantially the whole depth of tank 11, i.e. substantially across the tank in vertical direction. Moreover, always with reference to this embodiment, drawing unit 21 also preferably extends over the whole depth of tank 11, i.e. substantially across the tank in vertical direction, so as to allow sucking the liquid from tank 11, preferably until the liquid is almost completely exhausted.

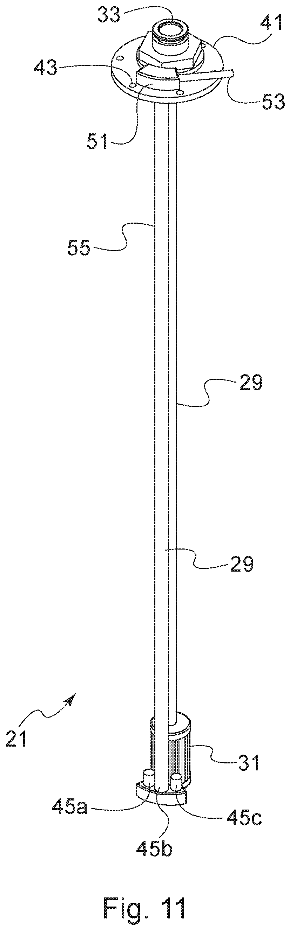

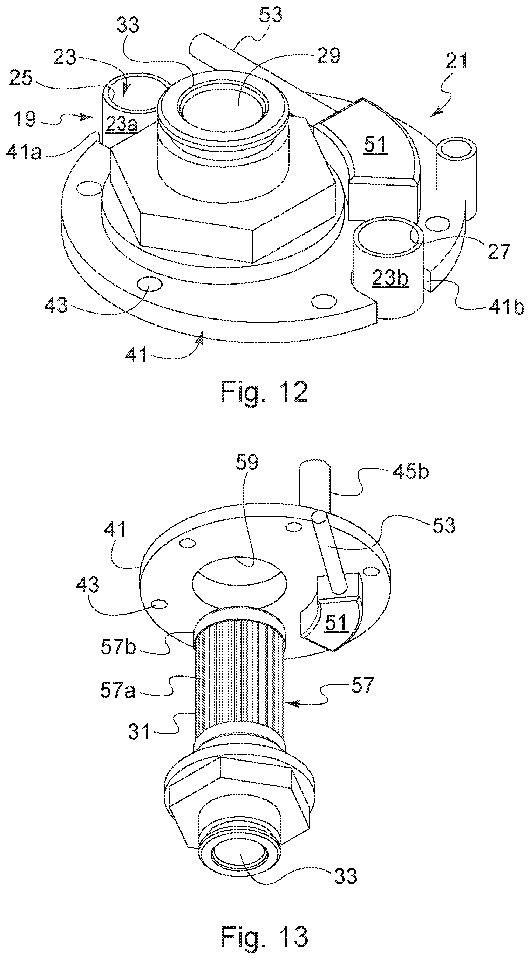

As it can be better seen in Figs. 11 and 12, according to this second embodiment of the invention, drawing unit 21 includes a drawing duct 29 having an inlet opening 31, substantially consisting of the outer surface of filter 57, and an outlet opening 33. Inlet and outlet openings 31, 33 of drawing duct 29 are located inside and outside tank 11, respectively. Moreover, according to this embodiment of the invention, drawing duct 29 extends across chamber 15 in vertical direction, so as to allow sucking the liquid from tank 11, preferably until the liquid is almost completely exhausted.

Referring in particular to Fig. 11, in this second embodiment of the invention, temperature sensors 45a, level sensors 45b and quality sensors 45c for the liquid contained in tank 11 are associated with a rod 55 extending over substantially the whole depth of tank 11 starting from ferrule 41.

Referring in particular to Fig. 12, in this second embodiment, ferrule 41 is made with circular shape and has a pair of diametrically opposite recesses 41, 41b for the passage of delivery section 23a and return section 23b of duct 23. In the illustrated embodiment, moreover, duct 23 of the first unit 19 comprises a rectilinear portion 23a, 23b and a spiral section 23c. A delivery section 23a and a return section 23b are defined in said rectilinear portion, and said spiral section 23c establishes communication between sections 23a, 23b. Moreover, always with reference to the illustrated embodiment, spiral section 23c and drawing unit 21 are configured so that said spiral section 23c substantially surrounds inlet opening 31 of said drawing unit 21, substantially defined at the outer surface of filter 57.

In this embodiment, as it can be appreciated in particular from Fig. 12, unit 19 and unit 21 are associated with wall 13 in substantially coincident positions, while still being two separate independent units. Said units 19, 21 are therefore structurally connected only by wall 13 of tank 11.

Moreover, always with reference to the illustrated embodiments, spiral section 23c and drawing unit 21 are configured so that said spiral section substantially surrounds inlet opening 31 of said drawing unit 21.

Advantageously, according to the invention, preferably a single flange 41 carries both temperature, level and quality sensors 45a, 45b, 45c for monitoring the parameters of the liquid contained in the tank, and the electronic apparatus consisting of the printed circuit board housed in seat 51 and transmitting the signals coming from said sensors 45a, 45b, 45c to the electrical circuit of the vehicle through an integrated electrical connection.

Moreover, always according to the invention, said flange 41 preferably also carries an integrated filter for purifying the operative liquid contained in tank 11 from impurities, and a threaded connection at opening 33 for the outlet of the filtered liquid.

Preferably, according to the invention, tank 11 further has an inlet 28 for the return of the excess substance coming from the SCR system. Such an inlet 28 preferably consists of a thin tube 28a co-moulded in tank wall 13 and provided with a connecting joint 28b located outside tank 11 for connection of a return pipe coming from the SCR system. Such a thin tube 28a is preferably made of plastics, e.g. the same plastic material as that of the tank, or of metal or another material. Preferably, said thin tube 28a is located near wall portion 13a to which the first heating unit 19 is secured, and preferably on top face 35 of tank 11.

Always according to the invention, tank 11 is moreover provided with a vent opening 30, preferably formed on said top face 35 of tank 11 and intended to allow gas discharge towards the atmosphere, in order to avoid pressure increase within the tank. Said opening 30 can be advantageously equipped with a filter for preventing entry of impurities.

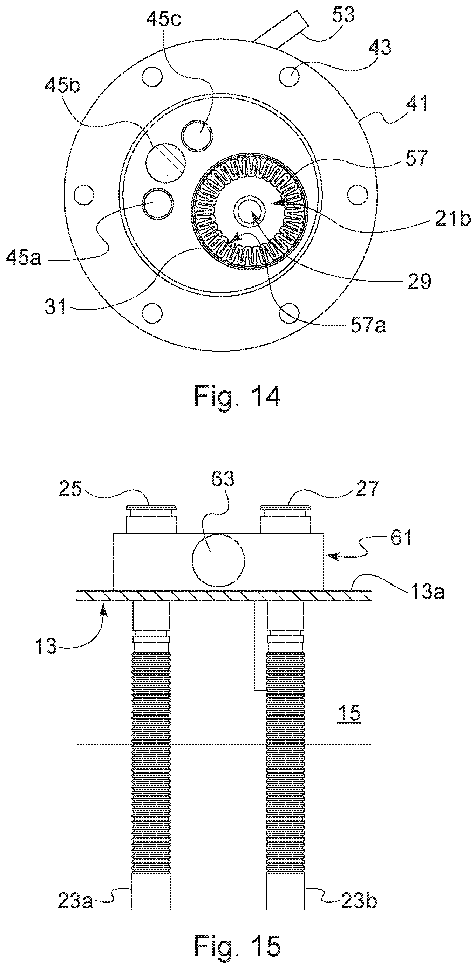

Referring in particular to Figs. 13 and 14, drawing unit 21 includes a filter 57, preferably with substantially cylindrical shape, having a filtering material 57a that is preferably pleated in order to increase the filtering surface. Filtering material 57a has a substantially toroidal shape, has a closed bottom 57b and defines a corresponding and preferably interchangeable cartridge, as it can be better appreciated from Fig. 13. In this embodiment, flange 41 is thus provided with a hole 59 for housing a cylindrical cartridge of filtering material 57a. The cylindrical cartridge of filtering material 57a can advantageously be screwed or secured in another way into said hole 59.

In other embodiments, filter 57 will be a "for-life" filter, i.e. it does not need to be replaced during the whole life of the vehicle. Filtering material 57a can consist for instance of a pleated net or of another suitable material. The filtering degree of filtering material 57a will preferably range from 1 to 100 microns, in order to meet the different use requirements.

Therefore, drawing unit 21 preferably has an extension 21a located inside tank 11 and internally defining an intake chamber 21b communicating with outlet opening 33 and communicating with chamber 15 of tank 11 through a filter 57.

Referring to Fig. 15, there is shown an embodiment of the invention in which inlet and outlet openings 25, 27 of duct 23 of the first heating unit 19 are connected to at least one solenoid valve 61. According to the invention, solenoid valve 61 is located outside tank 11, in contact with wall 13 of tank 11. In the specific case of the illustrated embodiment, solenoid valve 61 is secured against portion 13a of said wall 13. Said solenoid valve 61 is arranged to intercept the flow of the heating fluid circulating in duct 23 in order to adjust the flow rate thereof. Typically, said fluid is the fluid of the cooling circuit of the endothermic engine the exhaust system of which is equipped with an SCR system to which the fluid contained in tank 11 is sent. Solenoid valve 61 is provided with a connector 63 for connecting solenoid valve 61 to an electrical circuit associated with an electronic control unit.

Turning again to Fig. 1, tank 11 has a seat 71 for housing a filler pipe for filling up tank 11. Seat 71 can be obtained by forming a cylindrical extension 71a in tank wall 13 while the tank is being moulded. Cylindrical extension 71a extends outside tank 11 in a direction substantially perpendicular to top face 35 of the tank body. Said extension 71a surrounds a preferably circular opening, housing the filler pipe.

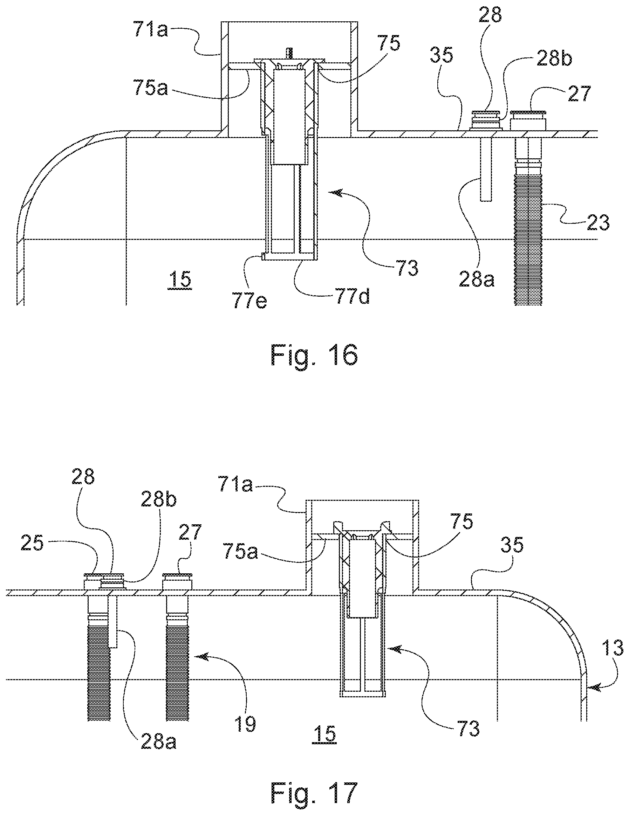

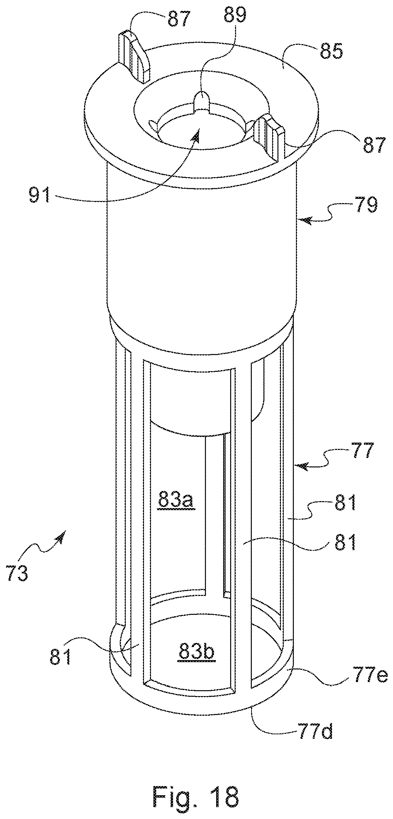

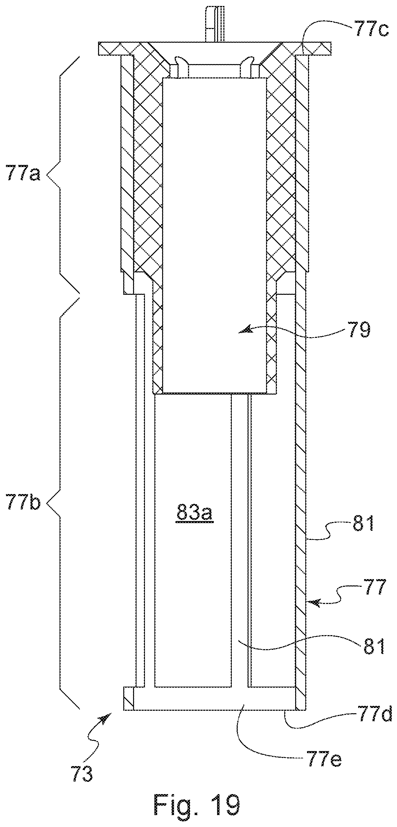

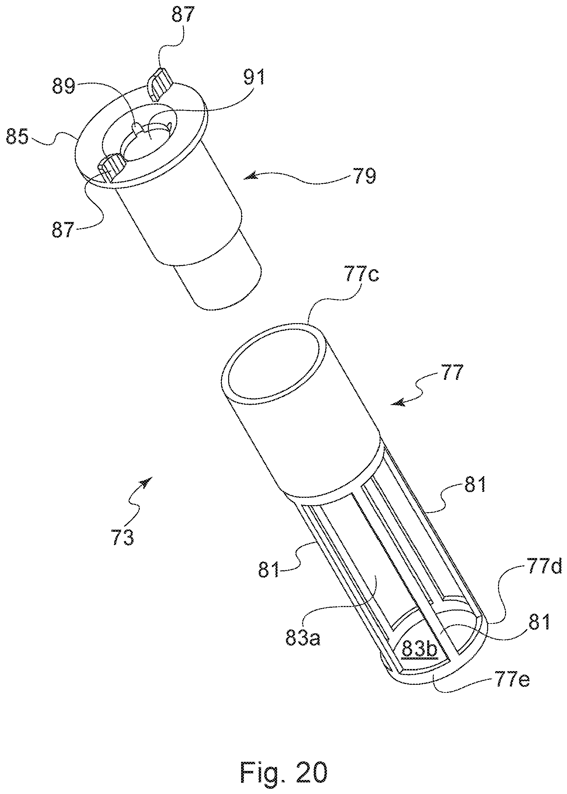

Referring to Figs. 16 to 20, there is shown in detail a filler pipe 73 made according to a preferred embodiment of the invention. In the illustrated embodiment, an opening 75 is formed in a transverse wall or partition 75a of extension 71a. Said transverse wall or partition 75a is formed inside extension 71a and lies in a plane substantially parallel to, but not coinciding with face 35 of the body of tank 11. In other embodiments, transverse partition 75a coincides with tank wall 13 and lies therefore in a plane coinciding with that of said wall 13. In the illustrated embodiment, extension 71a has a cylindrical shape with circular cross-section, and also internal seat 71 has a cylindrical shape with circular cross-section. Opening 75 for the passage of filler pipe 73 is formed substantially centrally of transverse partition 75a.

Filler pipe 73 comprises a body of plastic material in which an outer hollow portion 77 and an inner hollow portion 79 are defined. Outer portion 77 has a substantially cylindrical shape with circular cross-section and includes a laterally closed portion 77a and a laterally open portion 77b. Both bases 77c, 77d of outer portion 77 are open. Open outer portion 77b defines a set of axial extensions 81, five in the illustrated example, which extend along as many generatrices starting from laterally closed portion 77a and end at an annular portion 77e of open base 77d. Open portion 77b and the corresponding open base 77d house a filtering net 83a, 83b arranged to separate possibly present impurities from the substance flow introduced into filler pipe 73 for filling tank 11. Closed portion 77a of outer hollow portion 77 can be secured, at open base 77c, into opening 75 provided in transverse wall 75a of seat 71 in tank 11. Said closed portion 77a can be secured into opening 75 by known means, for instance a toothed joint, allowing removing outer portion 77 of filler pipe 73 from seat 71 for instance in order to clean filter 83a, 83b. In the alternative, it is possible to permanently secure said outer hollow portion 77 to opening 75.

Filler pipe 73 according to this preferred embodiment of the invention further includes an inner hollow portion 79 comprising a cylindrical body with circular cross-section removably housed in outer hollow portion 77. Said inner portion 79, when housed in outer portion 77, extends over the whole length of closed portion 77a starting from open base 77c, and over a section of open portion 77b corresponding to about 1/4 of the length of said open portion 77b.

According to this embodiment of the invention, inner portion 79 includes an annular ferrule 85 having tabs 87 axially extending outside said annular ferrule 85. Inner portion 79 can be made to engage outer portion 77 by manually rotating inner portion 79 by means of said tabs 87.

Advantageously, filler pipe 73 has a considerably wider filtering surface than the current filler pipes. The filtering surface of filler pipe 73 is substantially given by the extension of filtering net 83a, 83b surrounding open cylindrical portion 77b and covering open base 77d of the body of outer portion 77.

Advantageously, inner portion 79 is equipped with an insert including a permanent magnet arranged to cooperate with the valve provided in the gun delivering the urea solution. Aeration slots 89 are provided in opening 91 of inner portion 79 surrounded by ferrule 85, through which the spout of said delivery gun is introduced.

Closed portion 77a of outer portion 77 of filler pipe 73 can moreover be locked by means of a fast coupling into opening 75 provided in partition 75a.

### Industrial applicability

The tank according to the invention has advantageous industrial application, since it is arranged to be installed aboard vehicles actuated by endothermic engines, in order to contain a fluid in liquid state, intended for a system for the selective catalytic reduction (SCR) of the exhaust system of the endothermic engine.

## Claims

1. Tank (11) adapted to contain a fluid and having a heater, the tank comprising a wall (13) made of a plastic material and defining therein a tank chamber (15), and an assembly (17) for heating the fluid contained in the tank, said assembly (17) being equipped with a first unit (19), or heating unit, which comprises a heating duct (23) for conveying a heating fluid, said duct being received within the tank chamber (15) and being provided with an inlet opening (25) and an outlet opening (27) for said heating fluid, said openings being located outside the tank (11), wherein said heating unit (17) is incorporated in the wall (13) of tank (11) and it is immovably associated with the tank so that the tank and the heating duct form a single piece, wherein the duct of the heating unit (17) is made of the same material as that of the tank wall, wherein said assembly (17) further comprises a second unit (21), or drawing unit, comprising a duct (29) having an inlet opening (31) and an outlet opening (33) located inside and outside the tank (11), respectively, **characterized in that** said units (19, 21) are separated from each other by a portion of the tank wall (13), whereby, if the tank wall were removed, said units (19, 21) would be disjoined from each other and **in that** said first unit (19) and said second unit (21) are associated with the tank (11) at different portions (13a, 13b) of said tank wall (13).

2. Tank according to claim 1, wherein said first (19) and said second unit (21) are located at a distance from each other, that is, they are associated with wall (13) of tank (11) at respective portions (13a, 13b) of said wall distant from each other.

3. Tank according to claim 1 or 2, wherein said first (19) and said second unit (21) are associated with wall (13) of the tank on opposite parallel faces (35, 37) of tank (11).

4. Tank according to claim 1 or 2, wherein said first (19) and said second unit (21) are associated with wall (13) of the tank on respective perpendicular faces (35, 39) of tank (11).

5. Tank according to any of the preceding claims, wherein the duct (23) for conveying a heating fluid in the first unit (19) comprises a rectilinear portion and a spiral section (23c), a delivery section (23a) and a return section (23b) being defined within said rectilinear portion, and wherein said spiral section (23c) establishes communication between the delivery and return sections.

6. Tank according to claim 5, wherein said spiral section (23c) and the drawing unit (21) are configured in such a way that said spiral section (23c) surrounds the inlet opening (31) of said drawing unit (21).

7. Tank according to any of the preceding claims, wherein the inlet opening (25) and the outlet opening (27) of the duct (23) of the first heating unit (19) are connected to at least one solenoid valve (61) located outside the tank (11) and in contact with the tank wall (13), said at least one solenoid valve (61) being arranged to intercept the flow of the heating fluid circulating within the duct (23) in order to adjust the flow rate thereof.

8. Method for manufacturing a tank (11) made of a plastic material for containing a fluid, the tank comprising a wall (13) made of a plastic material and defining a tank chamber (15) therein, and an assembly (17) for heating the fluid contained in the tank, said assembly (17) being equipped with a first unit (19), or heating unit, which comprises a duct (23) for conveying a heating fluid, said duct being received within the tank chamber (15) and being provided with an inlet opening (25) and an outlet opening (27) for said heating fluid, said openings being located outside the tank (11), wherein said method comprises the step of obtaining, by means of moulding of plastic materials in a mould for plastic materials, a tank (11) incorporating said first unit (19) and in that the duct (23) of the heating unit (19) is made of the same material as that of the tank wall, wherein there is provided the step of providing a second unit (21), or drawing unit, which comprises a duct (29) having an inlet opening (31) and an outlet opening (33) located inside and outside the tank (11), respectively; **characterized in that** is provided a step of associating said second unit (21) with the wall (13) of the tank thus obtained in such a way that said first unit (19) and said second unit (21) are separated from each other by a portion of the tank wall (13), whereby, if the tank wall were removed, said units (19, 21) would be disjoined from each other and **in that** said first unit (19) and said second unit (21) are associated with the tank (11) at different portions (13a, 13b) of said tank wall (13).

9. Method according to claim 8, wherein said first unit (19) comprises a duct (23) made of a metal material or a plastic material or a combination of plastics and metal, said duct having at least one rectilinear delivery portion (23a) and one rectilinear return portion (23b) and at least one non-rectilinear connecting portion (23c), and being provided with an inlet opening (25) and an outlet opening (27), and wherein said step of obtaining the tank (11) comprises the steps of:
- manufacturing the tank (11) by embedding at least a portion of the duct (23) into the material of the tank wall so that said inlet and outlet openings are outside the tank.

## Patentansprüche

1. Behälter (11), der dafür ausgelegt ist, ein Fluid aufzunehmen, und eine Heizung aufweist, wobei der Behälter eine aus Kunststoff hergestellte Wand (13) aufweist, darin eine Behälterkammer (15) definiert und eine Baugruppe (17) zum Beheizen von in dem Behälter enthaltenem Fluid aufweist, wobei die Baugruppe (17) mit einer ersten Einheit (19) oder Heizeinheit ausgestattet ist, die einen Heizkanal (23) zum Leiten eines Heizfluids aufweist, wobei der Kanal in der Behälterkammer (15) angeordnet ist und mit einer Einlassöffnung (25) und einer Auslassöffnung (27) für das Heizfluid versehen ist, wobei die Öffnungen außerhalb des Behälters (11) angeordnet sind, wobei die Heizeinheit (17) in die Wand (13) des Behälters (11) integriert ist und unbeweglich mit dem Behälter verbunden ist, so dass der Behälter und der Heizkanal ein Teil bilden, wobei der Kanal der Heizeinheit (17) aus demselben Material hergestellt ist wie die Behälterwand, wobei die Baugruppe (17) zudem eine zweite Einheit (21) oder Saugeinheit aufweist, die einen Kanal (29), der eine Einlassöffnung (31) und eine Auslassöffnung (33), die innerhalb bzw. außerhalb des Behälters (11) angeordnet sind, aufweist, **dadurch gekennzeichnet, dass** die Einheiten (19, 21) voneinander durch einen Abschnitt der Behälterwand (13) getrennt sind, wodurch, wenn die Behälterwand entfernt würde, die Einheiten (19, 21) von einander separiert würden, und dass die erste Einheit (19) und die zweite Einheit (21) dem Behälter (11) an unterschiedlichen Abschnitten (13a, 13b) der Behälterwand (13) zugeordnet sind.

2. Behälter nach Anspruch 1, wobei die erste (19) und die zweite Einheit (21) in einem Abstand voneinander angeordnet sind, das heißt, sie sind mit der Wand (13) des Behälters (11) an entsprechenden Abschnitten (13a, 13b) der Wand verbunden, die voneinander entfernt sind.

3. Behälter nach Anspruch 1 oder 2, wobei die erste (19) und die zweite Einheit (21) mit der Wand (13) des Behälters an gegenüberliegenden, zueinander parallelen Seiten (35, 37) des Behälters (11) verbunden sind.

4. Behälter nach Anspruch 1 oder 2, wobei die erste (19) und zweite Einheit (21) der Wand (13) des Behälters an zueinander rechtwinkligen Seiten (35, 36) des Behälters (11) angeordnet sind.

5. Behälter nach einem der vorstehenden Ansprüche, wobei der Kanal (23) zum Leiten einer Heizflüssigkeit in der ersten Einheit (19) einen geradlinigen Abschnitt und einen gebogenen Abschnitt (23c), einen Zuführabschnitt (23a) und einen Rückführabschnitt (23b), der in dem geradlinigen Abschnitt ausgebildet ist, aufweist, und wobei der gebogene Abschnitt (23c) eine Verbindung zwischen den Zuführ- und Rückführabschnitten bildet.

6. Behälter nach Anspruch 5, wobei der gebogene Abschnitt (23c) und die Saugeinheit (21) so ausgelegt sind, dass der gebogene Abschnitt (23c) die Einlassöffnung (31) der Saugeinheit (21) umgibt.

7. Behälter nach einem der vorstehenden Ansprüche, wobei die Einlassöffnung (25) und die Auslassöffnung (27) des Kanals (23) der ersten Heizeinheit (19) mit wenigstens einem Magnetventil (61) aufweist, das außerhalb des Behälters (11) und mit der Behälterwand (13) in Kontakt angeordnet ist, wobei das wenigstens eine Magnetventil (61) hierfür ausgelegt ist, den Fluss des in dem Kanal (23) zirkulierenden Heizfluids zu unterbrechen, um dessen Strömungsrate anzupassen.

8. Verfahren zum Herstellen eines Behälters (11) aus Kunststoff zum Aufnehmen eines Fluids, wobei der Behälter eine aus Kunststoff hergestellte Wand (13) aufweist, darin eine Behälterkammer (15) definiert und eine Baugruppe (17) zum Beheizen von in dem Behälter enthaltenem Fluid aufweist, wobei die Baugruppe (17) mit einer ersten Einheit (19) oder Heizeinheit ausgestattet ist, die einen Kanal (23) zum Leiten eines Heizfluids aufweist, wobei der Kanal in der Behälterkammer (15) angeordnet ist und mit einer Einlassöffnung (25) und einer Auslassöffnung (27) für das Heizfluid versehen ist, wobei die Öffnungen außerhalb des Behälters (11) angeordnet sind, wobei das Verfahren einen Schritt des Erhaltens eines Behälters (11) mittels Gießen von Kunststoff in eine Form für Kunststoffmaterial aufweist, wobei der Behälter (11) die erste Einheit (19) enthält und der Kanal (23) der Heizeinheit (19) aus demselben Material wie die Behälterwand ist, wobei ein Schritt des Bereitstellens einer zweiten Einheit (21) oder Saugeinheit vorgesehen ist, die einen Kanal (29) aufweist, der eine Einlassöffnung (31) und eine Auslassöffnung (33) aufweist, die innerhalb bzw. außerhalb des Behälters (11) angeordnet sind, **dadurch gekennzeichnet, dass** ein Schritt des Verbindens der zweiten Einheit (21) mit der Wand (13) des so erhaltenen Behälters vorgesehen ist und die erste Einheit (19) und die zweite Einheit (21) von einander durch einen Abschnitt der Behälterwand (13) getrennt sind, wodurch, wenn die Behälterwand entfernt würde, die Einheiten (19, 21) von einander separiert wären, und dass die erste Einheit (19) und die zweite Einheit (21) mit dem Behälter an verschiedenen Abschnitten (13a, 13b) der Behälterwand (13) verbunden sind.

9. Verfahren nach Anspruch 8, wobei die erste Einheit (19) einen Kanal (23) aus Metall oder Kunststoff oder eine Kombination aus Kunststoff und Metall aufweist, wobei der Kanal wenigstens einen geradlinigen Zuführabschnitt (23a) und einen geradlinigen Rückführabschnitt (23b) und wenigstens einen nicht-geradlinigen Verbindungsabschnitt (23c) aufweist und mit einer Einlassöffnung (25) und einer Auslassöffnung (27) versehen ist, und wobei der Schritt des Erhaltens des Behälters (11) die folgenden Schritte aufweist:
- Herstellen des Behälters (11) durch Einbetten wenigstens eines Abschnitts des Kanals (23) in das Material der Behälterwand, so dass die Einlass- und Auslassöffnungen außerhalb des Behälters sind.

## Revendications

1. Réservoir (11) propre à contenir un fluide et comportant un dispositif de chauffage, le réservoir comprenant une paroi (13) réalisée en un matériau plastique et définissant à l'intérieur de celle-ci une chambre de réservoir (15), et un ensemble (17) pour chauffer le fluide contenu dans le réservoir, ledit ensemble (17) étant équipé d'une première unité (19), ou unité de chauffage, qui comprend un conduit de chauffage (23) pour acheminer un fluide de chauffage, ledit conduit étant reçu à l'intérieur de la chambre de réservoir (15) et étant pourvu d'une ouverture d'entrée (25) et d'une ouverture de sortie (27) pour ledit fluide de chauffage, lesdites ouvertures étant situées à l'extérieur du réservoir (11), dans lequel ladite unité de chauffage (17) est incorporée dans la paroi (13) du réservoir (11) et elle est associée de manière immobile au réservoir de telle sorte que le réservoir et le conduit de chauffage forment une seule pièce, dans lequel le conduit de l'unité de chauffage (17) est réalisé dans le même matériau que celui de la paroi du réservoir, dans lequel ledit ensemble (17) comprend en outre une deuxième unité (21), ou unité de prélèvement, comprenant un conduit (29) présentant une ouverture d'entrée (31) et une ouverture de sortie (33) situées respectivement à l'intérieur et à l'extérieur du réservoir (11), **caractérisé en ce que** lesdites unités (19, 21) sont séparées l'une de l'autre par une portion de la paroi (13) du réservoir, moyennant quoi, si la paroi du réservoir était retirée, lesdites unités (19, 21) seraient désolidarisées l'une de l'autre, et **en ce que** ladite première unité (19) et ladite deuxième unité (21) sont associées au réservoir (11) au niveau de portions différentes (13a, 13b) de ladite paroi (13) du réservoir.

2. Réservoir selon la revendication 1, dans lequel ladite première unité (19) et ladite deuxième unité (21) sont situées à distance l'une de l'autre, c'est-à-dire qu'elles sont associées à la paroi (13) du réservoir (11) au niveau de portions respectives (13a, 13b) de ladite paroi distantes l'une de l'autre.

3. Réservoir selon la revendication 1 ou 2, dans lequel ladite première unité (19) et ladite deuxième unité (21) sont associées à la paroi (13) du réservoir sur des faces parallèles opposées (35, 37) du réservoir (11).

4. Réservoir selon la revendication 1 ou 2, dans lequel ladite première unité (19) et ladite deuxième unité (21) sont associées à la paroi (13) du réservoir sur des faces perpendiculaires respectives (35, 39) du réservoir (11).

5. Réservoir selon l'une quelconque des revendications précédentes, dans lequel le conduit (23) pour acheminer un fluide de chauffage dans la première unité (19) comprend une portion rectiligne et un tronçon en spirale (23c), un tronçon de départ (23a) et un tronçon de retour (23b) étant définis dans ladite portion rectiligne, et dans lequel ledit tronçon en spirale (23c) établit une communication entre les tronçons de départ et de retour.

6. Réservoir selon la revendication 5, dans lequel ledit tronçon en spirale (23c) et l'unité de prélèvement (21) sont configurés de telle manière que ledit tronçon en spirale (23c) entoure l'ouverture d'entrée (31) de ladite unité de prélèvement (21).

7. Réservoir selon l'une quelconque des revendications précédentes, dans lequel l'ouverture d'entrée (25) et l'ouverture de sortie (27) du conduit (23) de la première unité de chauffage (19) sont reliées à au moins une électrovanne (61) située à l'extérieur du réservoir (11) et en contact avec la paroi (13) du réservoir, ladite au moins une électrovanne (61) étant agencée pour intercepter l'écoulement du fluide de chauffage circulant à l'intérieur du conduit (23) afin d'en régler le débit.

8. Procédé de fabrication d'un réservoir (11) réalisé en un matériau plastique destiné à contenir un fluide, le réservoir comprenant une paroi (13) réalisée en un matériau plastique et définissant à l'intérieur de celle-ci une chambre de réservoir (15), et un ensemble (17) pour chauffer le fluide contenu dans le réservoir, ledit ensemble (17) étant équipé d'une première unité (19), ou unité de chauffage, qui comprend un conduit (23) pour acheminer un fluide de chauffage, ledit conduit étant reçu à l'intérieur de la chambre de réservoir (15) et étant pourvu d'une ouverture d'entrée (25) et d'une ouverture de sortie (27) pour ledit fluide de chauffage, lesdites ouvertures étant situées à l'extérieur du réservoir (11), dans lequel ledit procédé comprend l'étape consistant à obtenir, au moyen d'un moulage de matières plastiques dans un moule pour matières plastiques, un réservoir (11) incorporant ladite première unité (19), et en ce que le conduit (23) de l'unité de chauffage (19) est réalisé dans le même matériau que celui de la paroi du réservoir, dans lequel il est prévu l'étape consistant à fournir une deuxième unité (21), ou unité de prélèvement, qui comprend un conduit (29) présentant une ouverture d'entrée (31) et une ouverture de sortie (33) situées respectivement à l'intérieur et à l'extérieur du réservoir (11) ; **caractérisé en ce qu'**il est prévu une étape consistant à associer ladite deuxième unité (21) à la paroi (13) du réservoir ainsi obtenu de telle manière que ladite première unité (19) et ladite deuxième unité (21) sont séparées l'une de l'autre par une portion de la paroi (13) du réservoir, moyennant quoi, si la paroi du réservoir était retirée, lesdites unités (19, 21) seraient désolidarisées l'une de l'autre, et **en ce que** ladite première unité (19) et ladite deuxième unité (21) sont associées au réservoir (11) au niveau de portions différentes (13a, 13b) de ladite paroi (13) du réservoir.

9. Procédé selon la revendication 8, dans lequel ladite première unité (19) comprend un conduit (23) réalisé en un matériau métallique ou en un matériau plastique ou en une combinaison de matières plastiques et de métal, ledit conduit présentant au moins une portion de départ rectiligne (23a) et une portion de retour rectiligne (23b) et au moins une portion de raccordement non rectiligne (23c), et étant pourvu d'une ouverture d'entrée (25) et d'une ouverture de sortie (27), et dans lequel ladite étape consistant à obtenir le réservoir (11) comprend les étapes consistant à :
- fabriquer le réservoir (11) en noyant au moins une portion du conduit (23) dans le matériau de la paroi du réservoir de telle sorte que lesdites ouvertures d'entrée et de sortie se trouvent à l'extérieur du réservoir.
